# EUROPÄISCHE PATENTSCHRIFT

(11) **EP 4 119 832 B1**
(45) Veröffentlichungstag und Bekanntmachung des Hinweises auf die Patenterteilung: **11.12.2024**
(21) Anmeldenummer: 22184849.2
(22) Anmeldetag: 14.07.2022
(51) Int. Cl.: F16L 57/06, F16L 59/02

(54) **ROHRSCHUTZPROFIL**
PIPE PROTECTIVE PROFILE
PROFILÉ DE PROTECTION DE TUBE

(30) Priorität: 14.07.2021 DE 102021118244
(43) Veröffentlichungstag der Anmeldung: 18.01.2023
(73) Patentinhaber: Junique, Lionel, 02826 Görlitz (DE)
(72) Erfinder: Junique, Lionel, 02826 Görlitz (DE)
(74) Vertreter: Schied, Sebastian

(56) Entgegenhaltungen:
- EP-A2- 0 219 155
- AT-B- 396 624
- DE-A1- 1 962 654

## Beschreibung

Die Erfindung betrifft ein Rohrschutzhohlprofil welches sehr einfach und schnell an oder auf beispielsweise Rohren, Stäben, Stangen, Kabeln oder Profilen oder Anordnungen daraus angeordnet bzw. montiert werden kann und zudem den notwendigen Schutz vor insbesondere mechanischen Einflüssen bietet. Das Rohrschutzhohlprofil ermöglicht eine einfache und kraftlose Montage als mechanischer Schutz an beispielsweise Rohren, Stäben, Stangen, Kabel oder Profilen oder an Rahmenstrukturen oder an Konstruktionen aus beispielsweise Rohren, Stäben, Stangen, Kabel oder Profilen.

Bekannt sind Wärmeschutzprofile mit einer Längserstreckung umfassend einen Innenraum und einen den Innenraum umgebenden Mantel und einen Außenbereich außerhalb des Mantels, wobei der Mantel entlang der Längserstreckung einen durchgehenden einfachen parallelen Schlitz als Öffnung zwischen dem Innenraum und den Außenbereich aufweist, wobei die beiden durch den Schnitt gebildeten und benachbarten Mantelwandabschnitte aneinander liegen. Nachteilig ist hieran, das beim Überstülpen bzw. Aufstecken des Wärmeschutzprofils entlang seiner Längserstreckung auf ein Rohr die Mantelwandabschnitte zum Innenraum gebogen oder gekrümmt werden und ein zusätzlicher Handgriff bzw. zusätzliche Handgriffe und Korrektoren des Wärmeschutzprofils erforderlich werden und somit das Überstülpen bzw. Aufstecken des Wärmeschutzprofils zeitlich aufwändig und nicht oder nur sehr aufwändig automatisierbar ist.

Die DE 19 62 654 A1 zeigt ein Verfahren und eine Vorrichtung zur Montage hülsenförmiger Rohrisolierungen.

Aufgabe der Erfindung ist es Rohrschutzhohlprofil zu schaffen, welches sehr einfach und schnell an oder auf beispielsweise Rohren, Stäben, Stangen, Kabel oder Profilen oder Anordnungen daraus angeordnet bzw. montiert werden kann und zudem den notwendigen Schutz vor insbesondere mechanischen Einflüssen bietet.

Mit der Erfindung wird im angegebenen Anwendungsfall erreicht, dass ein Rohrschutzhohlprofil geschaffen wird, wobei das Rohrschutzhohlprofil eine Längserstreckung, einen Innenraum und einen den Innenraum umgebenden Mantel und einen Außenbereich außerhalb des Mantels umfasst, wobei der Mantel entlang der Längserstreckung einen Schnitt als durchgehende Öffnung zwischen dem Innenraum und den Außenbereich aufweist, wobei die in Längserstreckung durchgehende Öffnung sich zumindest bereichsweise vom Außenbereich hin zum Innenraum verjüngt und/oder weitet.

Hierbei befindet sich das Rohrschutzhohlprofil zunächst in einer spannungsfreien Lage. Erst beim Anordnen oder Montieren oder Entfernen oder Demontieren wird eine Kraft, wie Druck bzw. Dehnung oder Streckung auf das Rohrschutzhohlprofil ausgeübt und damit die spannungsfreie Lage verlassen. Erst nach dem Anordnen oder Montieren kann je nach Form und Größe jeweiligen Rohr, jeweiligen Stab, jeweiliger Stange, jeweiligen Kabel oder jeweiligen Profil das Rohrschutzhohlprofil in oder annähernd in die spannungsfreien Lage zurückkehren. Ebenso kann das Rohrschutzhohlprofil nach dem Entfernen oder Demontieren in oder annähernd in die spannungsfreien Lage zurückkehren.

Vorteilhaft lässt sich das Rohrschutzhohlprofil schnell und mit geringem Aufwand seitlich oder aus einer radialen Richtung beispielsweise auf das jeweilige Rohr, den jeweiligen Stab, die jeweiligen Stange, das jeweilige Kabel oder das jeweilige Profil anordnen oder montieren, da sich die Öffnung, die sich zumindest bereichsweise vom Außenbereich hin zum Innenraum verjüngt, mit geringem Nachdruck und durch beispielsweise das jeweilige Rohr, den jeweiligen Stab, die jeweiligen Stange, das jeweilige Kabel oder das jeweilige Profil weitet bzw. das Rohrschutzhohlprofil gespreizt wird. Das Rohrschutzhohlprofil springt beispielsweise auf oder um das jeweilige Rohr, den jeweiligen Stab, die jeweilige Stange, das jeweilige Kabel oder das jeweilige Profil, ohne dass es zusätzlicher Handgriffe oder einer Nachbesserung bedarf.

Insbesondere wenn beispielsweise das jeweilige Rohr, der jeweilige Stab, die jeweilige Stange, das jeweilige Kabel oder das jeweilige Profil Teil einer komplexen Anordnung, wie beispielswiese eine Rahmenkonstruktion, ist oder anderweitig verbaut oder montiert oder angeschlossen ist und ein Aufschieben von einem axialen Ende beispielsweise des jeweiligen Rohrs, des jeweiligen Stabes, der jeweiligen Stange, des jeweiligen Kabels oder des jeweiligen Profils her nicht möglich ist, bietet das erfindungsgemäße Rohrschutzhohlprofil eine Lösung für ein schnelles und einfaches Anordnen auf beispielsweise dem jeweiligen Rohr, dem jeweiligen Stab, der jeweiligen Stange, dem jeweiligen Kabel oder dem jeweiligen Profil.

Indem sich die Öffnung zumindest bereichsweise vom Außenbereich hin zum Innenraum weitet, lässt sich der Mantel einfacher nach innen biegen und bietet weniger Widerstand. So rutscht das Rohrschutzhohlprofil einfach und schnell aus oder um beispielsweise das jeweilige Rohr, den jeweiligen Stab, die jeweiligen Stange, das jeweilige Kabel oder das jeweilige Profil, ohne dass es eines Nachhelfens oder einer Nachbesserung bedarf.

Die Dicke des Mantels des Rohrschutzhohlprofils richtet sich nach der zu erzielenden Schutzwirkung. Die Dicke kann in Umfangrichtung kontinuierlich oder diskontinuierlich sein.

Die Dicke des Mantels des Rohrschutzhohlprofils nimmt in Umfangrichtung im Bereich der Öffnung sprunghaft oder kontinuierlich zu.

Das Rohrschutzhohlprofil lässt sich vorzugsweise aus einem Schaumstoff oder Schaumstoffmaterial oder aus einer Kombination unterschiedlicher Schaumstoffe oder Schaumstoffmaterialien herstellen.

Vorteilhafte Ausgestaltungen der Erfindung sind in den Unteransprüchen dargestellt. Indem die durchgehende Öffnung zumindest bereichsweise einen v-förmigen oder u-förmigen oder anderweitigen geeigneten Querschnitt aufweist, wird die Weitung der Öffnung begünstigt und lässt sich auf beispielsweise das jeweilige Rohr, das jeweiligen Stab, die jeweiligen Stange, das jeweilige Kabel oder das jeweilige Profil anpassen. Hierbei richtet sich der Öffnungswinkel oder die Weite der durchgehenden Öffnung nach dem jeweiligen Rohr, dem jeweiligen Stab, der jeweiligen Stange, dem jeweiligen Kabel oder dem jeweiligen Profil.

Indem die gegenüberliegenden Mantelflächen oder Flanken in der durchgehenden Öffnung vorzugsweise konvex und/oder gegebenenfalls konkav ausgebildet sind, wird eine einfacher und zugleich ein verschleißarmer Aufbau erreicht. Vorteilhaft lassen sich Rohrschutzhohlprofile mit den konvex ausgebildeten gegenüberliegenden Mantelflächen oder Flanken in der durchgehenden Öffnung einfach anordnen oder montieren und ebenso einfach wieder entfernen. Scharfe verschleißbehaftetet Kanten lassen sich vermeiden.

Indem sich das verjüngte und/oder weite Ende der durchgehenden Öffnung sich bereichsweise zumindest annähernd parallel fortsetzt, wird ein Übergangsbereich geschaffen, welche beispielsweise verklebt werden kann. Hierdurch lässt sich ein versehentliches Entfernen oder abschieben verhindern.

Dieser Übergangsbereich erlaubt auch die Realisierung einer thermische Isolation oder Dämmung mit dem Rohrschutzhohlprofil, wodurch sich dessen Einsatzbereich vergrößert.

Indem die durchgehende Öffnung einen schlitzförmigen oder spaltförmigen Bereich aufweist, wird die Montage oder Anordnung des Rohrschutzhohlprofils und/oder die Verbindung der sich gegenüberliegenden Mantelflächen oder Flanken des schlitzförmigen oder spaltförmigen Bereichs in der durchgehende Öffnung auf beispielsweise das jeweilige Rohr, dem jeweiligen Stab, der jeweiligen Stange, dem jeweiligen Kabel oder dem jeweiligen Profil begünstigt.

Weiterhin wird eine thermische Isolation oder Dämmung mit dem Rohrschutzhohlprofil begünstigt.

Indem sich die gegenüberliegenden Mantelflächen oder Flanken in der durchgehenden Öffnung sich bereichsweise berühren oder beabstandet sind, wird die Montage oder Anordnung des Rohrschutzhohlprofils begünstigt. Bei Berührung wird eine thermische Isolation oder Dämmung mit dem Rohrschutzhohlprofil begünstigt. Ein größerer Abstand begünstigt die Montage oder Anordnung des Rohrschutzhohlprofils auf beispielsweise das jeweilige Rohr, dem jeweiligen Stab, der jeweiligen Stange, dem jeweiligen Kabel oder dem jeweiligen Profil.

Indem das Rohrschutzhohlprofil einen runden, ovalen oder eckigen Querschnitt oder einen daraus kombinierten Querschnitt aufweist, lässt es sich an unterschiedliche Querschnitte beispielsweise von Rohren, Stäben, Stangen, Kabel oder Profilen anpassen. Hierdurch werden der Sitz und die Schutzwirkung begünstigt.

Indem der Mantel einen kreisringförmigen Querschnitt aufweist, wird die Schutzwirkung begünstigt.

Mit einem diskontinuierlichen Querschnitt lässt sich neben der Schutzwirkung auch die Handhabbarkeit verbessern.

In einer vorteilhaften Weiterbildung ist im Bereich der durchgehenden Öffnung der Querschnitt oder die Höhe des Mantels vergrößert oder geweitet ist oder weist eine Überhöhung auf. Hierdurch lassen sich die Mantelflächen oder Flanken bzw. lässt sich die Breite der Mantelflächen oder Flanken, also die Strecke zwischen Innenraum und Außenbereich des Mantels, in der durchgehenden Öffnung verlängern. Das Anordnen oder Montieren des Rohrschutzhohlprofils wird verbessert. Zudem wird der Mantel an der durchgehenden Öffnung verstärkt und unempfindlicher gegen eine Zerstörung oder Abnutzung.

Zusätzlich wird, indem im Bereich der durchgehenden Öffnung der Querschnitt oder die Höhe des Mantels vergrößert oder geweitet ist oder eine Überhöhung aufweist, ein gegenseitiges Verkleben der gegenüberliegenden Mantelflächen oder Flanken in der durchgehenden Öffnung begünstigt. Die gegenüberliegenden Mantelflächen oder Flanken in der durchgehenden Öffnung lassen sich einfacher und zuverlässig aneinander ziehen.

Ein weiterer Vorteil besteht darin, dass der Bereich an der durchgehenden Öffnung, an dem der Querschnitt oder die Höhe des Mantels vergrößert oder geweitet ist oder eine Überhöhung aufweist, hilft das Rohrschutzhohlprofil zu öffnen und es sehr schnell auf einer Produktionslinie, beispielsweise Rohre, Stäbe, Stange, Kabel oder Profile, zu platzieren. Weiterhin kann der Bediener mit den Fingern fühlen, wo sich der Schlitz befindet, ohne hinzuschauen.

Indem der Mantel eine Innenfläche und Außenfläche umfasst, wobei die Innenfläche und/oder Außenfläche des Mantels eine Oberflächenstruktur oder Profilierung aufweisen, wird ebenfalls die Schutzwirkung begünstigt.

Die Oberflächenstruktur oder Profilierung verbessert weiterhin die Handhabbarkeit und Beweglichkeit.

Dabei kann bei Erhalt der Schutzwirkung auch Material eingespart werden. Mit einer Oberflächenstruktur oder Profilierung lässt sich auch eine Kennzeichnung beispielsweise für unterschiedliche Dimensionen oder Anwendungsfälle realisieren.

Die Oberflächenstruktur oder Profilierung kann beispielsweise eine Wellenstruktur oder eine Rechteckstruktur oder eine Dreiecksstruktur oder Sägezahnstruktur oder eine andere beliebige Oberflächenstruktur oder Profilierung sein.

Der Bereich der durchgehenden Öffnung, in dem der Querschnitt oder die Höhe des Mantels vergrößert oder geweitet ist oder eine Überhöhung aufweist, kann aus der Oberflächenstruktur oder Profilierung hervorgehen oder zusätzlich oder separat vorausgebildet sein.

Indem die Öffnung verschließbar ist, wird die Lagesicherheit und der Sitz auf dem jeweiligen Rohr, dem jeweiligen Stab, der jeweiligen Stange, dem jeweiligen Kabel oder dem jeweiligen Profil begünstigt.

Weiterhin oder alternativ wird mit der verschlossenen Öffnung die thermische Isolation oder Dämmung begünstigt.

Indem die Öffnung zumindest bereichsweise mit einem zur Öffnung komplementären Verschlussstreifen oder Verschlussprofil verschließbar ist, wird die die Schutzwirkung und, sofern benötigt, die thermische Isolation oder Dämmung weiter begünstigt.

Indem der Verschlussstreifen oder der Verschlussprofil mit dem Mantel verbunden ist und in die Öffnung einlegbar oder einschwenkbar ist, wird die Handhabbarkeit und das Einsetzen des Verschlussstreifens oder der Verschlussprofils begünstigt. Zudem wird begünstigt, dass der Verschlussstreifens oder das Verschlussprofil nicht verloren geht und bereits bei der Herstellung mit vorgesehen werden kann.

Der Verschlussstreifen oder das Verschlussprofil ist mit dem Mantel beispielsweise über eine Sollbruchstelle oder Sollrissstelle oder als flexible oder biegbare Verbindung verbunden. So kann der Verschlussstreifens oder das Verschlussprofil bei Verwendung abreißbar oder abbrechbar sein oder beim Einlegen oder Einschwenken am Mantel verbleiben.

Indem die Öffnung verklebbar und/oder der Verschlussstreifen oder das Verschlussprofil in der Öffnung einklebbar oder einsteckbar oder einrastbar ist, wird die Lagersicherheit des Verschlussstreifens oder des Verschlussprofils begünstigt. Weiterhin wird die die Schutzwirkung und, sofern benötigt, die thermische Isolation oder Dämmung weiter begünstigt.

Indem der Verschlussstreifen oder das Verschlussprofil in der Öffnung einsteckbar oder einrastbar ist, lässt sich je nach Art des Einstecken oder Einrastens der Verschlussstreifen oder das Verschlussprofil wieder entfernen, wodurch das Rohrschutzhohlprofil wiederverwendbar ist.

In dem die gegenüberliegenden Mantelflächen oder Flanken in der durchgehenden Öffnung durch Krafteinwirkung aneinander bewegt werden, also das Rohrschutzhohlprofil gestaucht und/oder gestreckt wird, lassen sich Mantelflächen oder Flanken in der durchgehende Öffnung verkleben und somit das Rohrschutzhohlprofil auch verschließen.

Das verschließen kann auch mittels Klettverschlüssen erfolgen, die sich entsprechend an oder auf den gegenüberliegenden Mantelflächen oder Flanken in der durchgehenden Öffnung kleben oder aufbringen oder anderweitig anordnen lassen.

Mehrere Ausführungsbeispiele der Erfindung sind in den Zeichnungen dargestellt und werden im Folgenden näher beschrieben. Es zeigen:
Fig. 1 ein Rohrschutzhohlprofil in perspektivischer Ansicht,
Fig. 2 bis Fig. 6 jeweils die Schnittdarstellung eines Rohrschutzhohlprofils und
Fig. 7 das Rohrschutzhohlprofil aus Figur 6 in perspektivischer Ansicht.

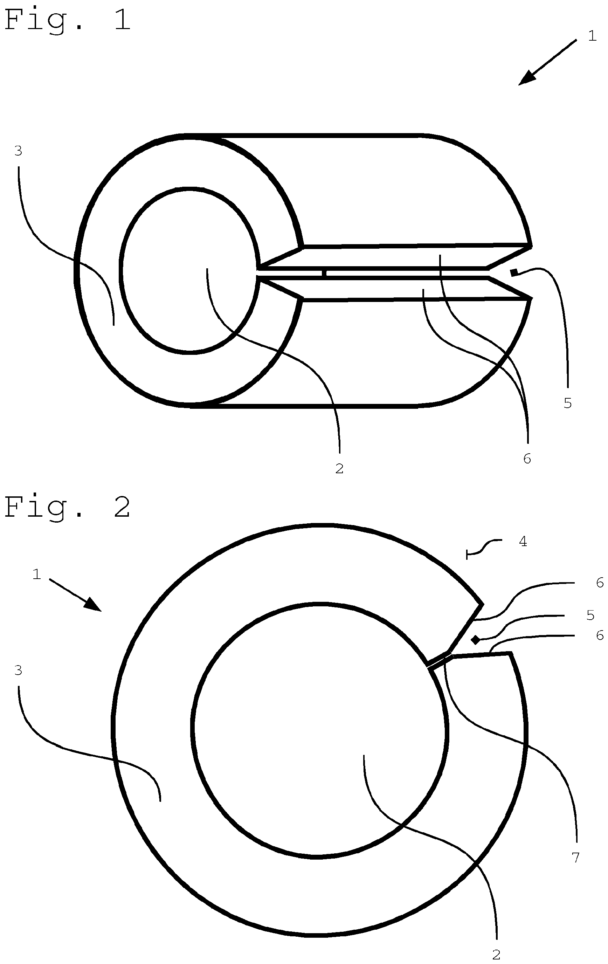

Die Figur 1 zeigt ein nicht erfindungsgemäßes Rohrschutzhohlprofil 1 mit einer Längserstreckung aus einem Schaumstoff. Das Rohrschutzhohlprofil 1 umfasst einen Innenraum 2 und einen den Innenraum 2 umgebenden Mantel 3 mit einem kreisringförmigen Querschnitt. Außerhalb des Mantels 3 ist ein Außenbereich 4 vorhanden. Der Mantel 3 weist entlang der Längserstreckung einen Schnitt als durchgehende Öffnung 5 zwischen dem Innenraum 2 und den Außenbereich 4 auf, deren Querschnitt im konkreten Ausführungsbeispiel v-förmig ist und sich vom Außenbereich 4 hin zum Innenraum 2 verjüngt. Die gegenüberliegenden Mantelflächen 6 oder Flanken 6 in der durchgehenden Öffnung 5 sind am verjüngten Ende zueinander beabstandet. Der Abstand beträgt beispielsweise 1,5 mm.

Die Figur 2 zeigt den Querschnitt eines nicht erfindungsgemäßen Rohrschutzhohlprofils 1 mit Blick auf ein axiales Ende des Rohrschutzhohlprofils 1. Grundlegend kann auch die Ausführungen zu Figur 1 verwiesen werden. Abweichend zur Figur 1 weist der Mantel 3 entlang der Längserstreckung eine durchgehende Öffnung 5 zwischen dem Innenraum 2 und den Außenbereich 4 auf, deren Querschnitt im konkreten Ausführungsbeispiel bereichsweise v-förmig ist und sich vom Außenbereich 4 hin zum Innenraum 2 verjüngt, wobei sich die durchgehende Öffnungen 5 am verjüngten Ende des v-förmigen Bereiches zumindest annähernd parallel als schlitzförmigen oder spaltförmiger Bereich 7 fortsetzt. Die zumindest annähernd parallelen gegenüberliegenden Mantelflächen 6 oder Flanken 6 in der durchgehenden Öffnung 5 als schlitzförmigen oder spaltförmiger Bereich 7 sind zueinander beabstandet. Der Abstand beträgt beispielsweise 1 mm.

Es kann jedoch auch vorgesehen sein, dass die zumindest annähernd parallelen gegenüberliegenden Mantelflächen 6 oder Flanken 6 in der durchgehenden Öffnung 5 sich berühren (nicht dargestellt).

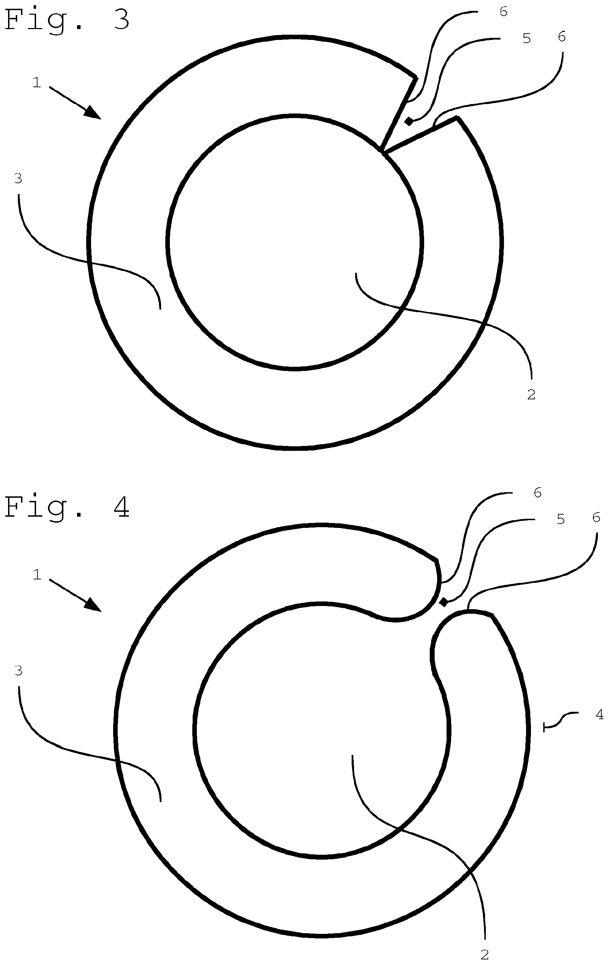

Die Figur 3 zeigt den Querschnitt eines nicht erfindungsgemäßen Rohrschutzhohlprofils 1 mit Blick auf ein axiales Ende des Rohrschutzhohlprofils 1. Grundlegend kann auch die Ausführungen zu Figur 1 verwiesen werden. Abweichend zur Figur 1 weist der Mantel 3 entlang der Längserstreckung eine durchgehende Öffnung 5 zwischen dem Innenraum 2 und den Außenbereich 4 auf, deren Querschnitt im konkreten Ausführungsbeispiel bereichsweise v-förmig ist und sich vom Außenbereich 4 hin zum Innenraum 2 verjüngt, wobei sich die gegenüberliegenden Mantelflächen 6 oder Flanken 6 in der durchgehenden Öffnung 5 am verjüngten Ende berühren.

Die Figur 4 zeigt den Querschnitt eines nicht erfindungsgemäßen Rohrschutzhohlprofils 1 mit Blick auf ein axiales Ende des Rohrschutzhohlprofils 1. Grundlegend kann auch die Ausführungen zu Figur 1 verwiesen werden. Abweichend zur Figur 1 weist der Mantel 3 entlang der Längserstreckung eine durchgehende Öffnung 5 zwischen dem Innenraum 2 und den Außenbereich 4 auf, wobei die gegenüberliegenden Mantelflächen 6 oder Flanken 6 in der durchgehenden Öffnung 5 konvex ausgebildet sind. Die konvex ausgebildeten gegenüberliegenden Mantelflächen 6 oder Flanken 6 in der durchgehenden Öffnung 5 sind zueinander beabstandet. Die konvex ausgebildeten gegenüberliegenden Mantelflächen 6 oder Flanken 6 in der durchgehenden Öffnung 5 können sich jedoch auch berühren. nicht dargestellt.

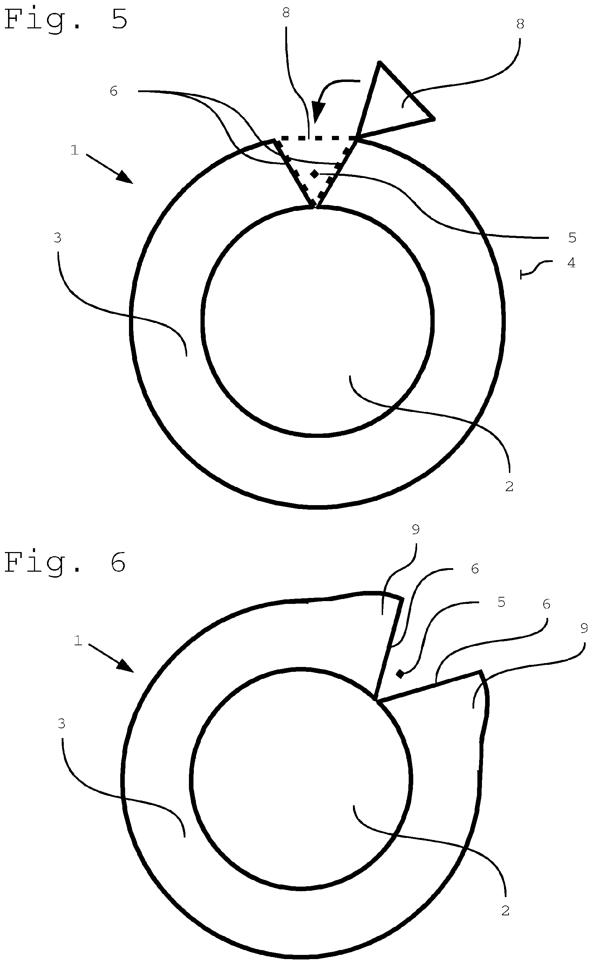

Die Figur 5 zeigt den Querschnitt eines nicht erfindungsgemäßen Rohrschutzhohlprofils 1 mit Blick auf ein axiales Ende des Rohrschutzhohlprofils 1. Grundlegend kann auch die Ausführungen zu Figur 1 verwiesen werden. Abweichend zur Figur 1 ist ein Verschlussprofil 8 vorhanden. Das Verschlussprofil 8 weist einen zur durchgehenden Öffnung 5 komplementären Querschnitt. Das Verschlussprofil 8 ist mit dem Mantel 3 verbunden und in die durchgehende Öffnung 5 einschwenkbar. Das in die durchgehenden Öffnung 5 eingeschenkte Verschlussprofil 8 ist mit gestrichelter Linie dargestellt. In der durchgehenden Öffnung 5 kann das Verschlussprofil 8 mittels eines Klebers oder mittels doppelseitigen Klebebands an den Mantelflächen 6 oder Flanken 6 in der durchgehenden Öffnung 5 befestigt oder fixiert werden.

Ebenso lassen sich berührende oder nur gering beabstandete oder nur die parallelen Bereiche der Mantelflächen 6 oder Flanken 6 in der durchgehenden Öffnung 5 verkleben (nicht dargestellt).

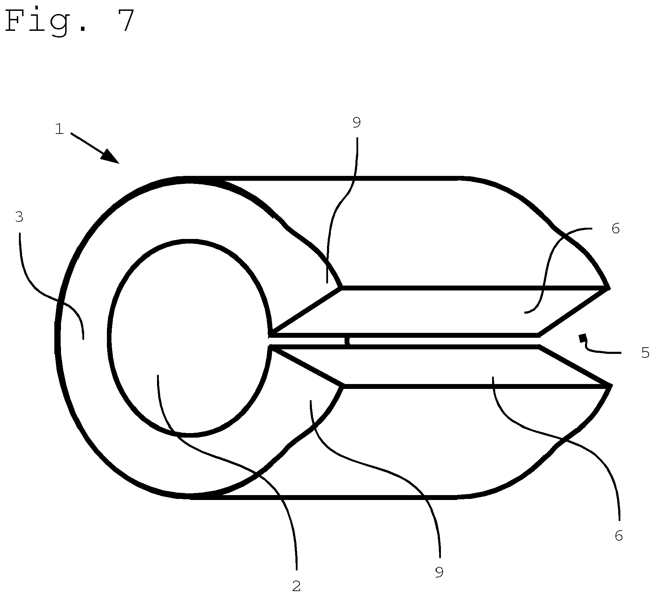

Die Figur 6 zeigt den Querschnitt eines erfindungsgemäßen Rohrschutzhohlprofils 1 mit Blick auf ein axiales Ende des Rohrschutzhohlprofils 1 und die Figur 7 die räumliche Ansicht des Rohrschutzhohlprofils 1 aus Figur 6. Grundlegend kann auch die Ausführungen zu Figur 1 verwiesen werden. Abweichend zur Figur 1 weist der Querschnitt oder die Höhe des Mantels 3 im Bereich oder an der durchgehenden Öffnung 5 einen vergrößerten oder geweiteten Bereich 9 oder eine Überhöhung 9 auf. Die Mantelflächen 6 oder Flanken 6 in der durchgehenden Öffnung 5 weisen eine größere Breite als in den anderen Beispielen auf. Die durchgehende Öffnung 5 ist weiter geöffnet.

Vorteilhaft lassen sich diese Mantelflächen 6 oder Flanken 6 in der durchgehenden Öffnung 5 verkleben (nicht dargestellt), da durch die Überhöhung 9 sich das Mantelmaterial bei Aneinanderziehen weiter strecken lässt, ohne zerstört zu werden.

### Zusammenstellung der Bezugszeichen

1 - Rohrschutzhohlprofil
2 - Innenraum
3 - Mantel
4 - Außenbereich
5 - Öffnung
6 - Mantelfläche in der Öffnung, Flanke in der Öffnung
7 - schlitzförmigen Bereich, spaltförmigen Bereich
8 - Verschlussstreifen,
9 - vergrößerter oder geweiteter Bereich, Überhöhung

## Patentansprüche

1. Rohrschutzhohlprofil (1) mit einer Längserstreckung umfassend einen Innenraum (2) und einen den Innenraum (2) umgebenden Mantel (3) und einen Außenbereich (4) außerhalb des Mantels (3), wobei der Mantel (3) entlang der Längserstreckung einen Schnitt als durchgehende Öffnung (5) zwischen dem Innenraum (2) und den Außenbereich (4) aufweist, wobei die in Längserstreckung durchgehende Öffnung (5) sich zumindest bereichsweise vom Außenbereich (4) hin zum Innenraum (2) verjüngt, **dadurch gekennzeichnet,**
**dass** im Bereich der durchgehenden Öffnung (5) der Querschnitt oder die Höhe des Mantels (5) vergrößert oder geweitet ist, wobei die Dicke des Mantels (5) des Rohrschutzhohlprofils (1) in Umfangrichtung im Bereich der Öffnung (5) sprunghaft oder kontinuierlich zunimmt.

2. Rohrschutzhohlprofil nach Anspruch 1,
**dadurch gekennzeichnet,**
**dass** die in Längserstreckung durchgehende Öffnung (5) sich zumindest bereichsweise vom Außenbereich (4) hin zum Innenraum (2) weitet.

3. Rohrschutzhohlprofil nach einem der vorhergehenden Ansprüche, 1 und 2,
**dadurch gekennzeichnet,**
**dass** die durchgehende Öffnung (5) zumindest bereichsweise einen v-förmigen oder u-förmigen Querschnitt aufweist.

4. Rohrschutzhohlprofil nach einem der vorhergehenden Ansprüche,
**dadurch gekennzeichnet,**
**dass** die Mantelflächen (6) oder Flanken (6) in der durchgehenden Öffnung (5) konvex und/oder konkav ausgebildet sind.

5. Rohrschutzhohlprofil nach einem der vorhergehenden Ansprüche,
**dadurch gekennzeichnet,**
**dass** sich das verjüngte und/oder weite Ende der durchgehenden Öffnung (5) sich bereichsweise zumindest annähernd parallel fortsetzt oder einen schlitzförmigen oder spaltförmigen Bereich (7) aufweist.

6. Rohrschutzhohlprofil nach einem der vorhergehenden Ansprüche,
**dadurch gekennzeichnet,**
**dass** sich die Mantelflächen (6) oder Flanken (6) in der durchgehenden Öffnung (5) sich bereichsweise berühren oder beabstandet sind.

7. Rohrschutzhohlprofil nach einem der vorhergehenden Ansprüche,
**dadurch gekennzeichnet,**
**dass** das Rohrschutzhohlprofil (1) einen runden, ovalen oder eckigen Querschnitt oder einen daraus kombinierten Querschnitt aufweist.

8. Rohrschutzhohlprofil nach einem der vorhergehenden Ansprüche,
**dadurch gekennzeichnet,**
**dass** der Mantel (3) einen kreisringförmigen Querschnitt oder einen diskontinuierlichen Querschnitt aufweist und/oder

9. Rohrschutzhohlprofil nach einem der vorhergehenden Ansprüche,
**dadurch gekennzeichnet,**
**dass** der Mantel (3) eine Innenfläche und Außenfläche umfasst, wobei die Innenfläche und/oder Außenfläche des Mantels (3) eine Oberflächenstruktur oder Profilierung aufweisen.

10. Rohrschutzhohlprofil nach einem der vorhergehenden Ansprüche,
**dadurch gekennzeichnet,**
**dass** die durchgehende Öffnung (5) verschließbar ist.

11. Rohrschutzhohlprofil nach einem der vorhergehenden Ansprüche,
**dadurch gekennzeichnet,**
**dass** die durchgehende Öffnung (5) zumindest bereichsweise mit einem zur durchgehenden Öffnung (5) komplementären Verschlussstreifen (8) oder Verschlussprofil (8) verschließbar ist.

12. Rohrschutzhohlprofil nach Anspruch 10,
**dadurch gekennzeichnet,**
**dass** der Verschlussstreifen (8) oder das Verschlussprofil (8) mit dem Mantel (3) verbunden ist und in die durchgehende Öffnung (5) einlegbar oder einschwenkbar ist.

13. Rohrschutzhohlprofil nach einem der vorhergehenden Ansprüche 10 und 11,
**dadurch gekennzeichnet,**
**dass** die durchgehende Öffnung (5) verklebbar und/oder der Verschlussstreifen (8) oder das Verschlussprofil (8) in der durchgehende Öffnung (5) einklebbar oder einsteckbar oder einrastbar ist.

## Claims

1. A pipe protection hollow profile (1) with a longitudinal extension comprising an interior (2) and a sheath (3) surrounding the interior (2) and an exterior area (4) outside the sheath (3), wherein the sheath (3) along its longitudinal extension has a cut as a continuous opening (5) between the interior (2) and the exterior area (4), where the continuous longitudinal opening (5) tapers at least in some areas from the exterior area (4) towards the interior (2),
**characterised in**
**that** in the area of the continuous opening (5), the cross-section or the height of the sheath (5) is enlarged or expanded, whereby the thickness of the sheath (5) of the pipe protection hollow profile (1) in the circumferential direction in the area of the opening (5) increases abruptly or continuously.

2. Pipe protection hollow profile according to claim 1,
**characterised in**
**that** the longitudinally continuous opening (5) widens at least in some areas from the exterior area (4) towards the interior area (2).

3. Pipe protection hollow profile according to any of the preceding claims 1 and 2, **characterised in**
**that** the continuous opening (5) has a V-shaped or U-shaped cross-section at least in some sections.

4. Pipe protection hollow profile according to any of the preceding claims,
**characterised in**
**that** the sheath surfaces (6) or flanks (6) in the continuous opening (5) are convex and/or concave.

5. Pipe protection hollow profile according to any of the preceding claims,
**characterised in**
**that** the tapered and/or widened end of the continuous opening (5) continues at least approximately parallel in some areas or has a slit-like or slit-like area (7).

6. Pipe protection hollow profile according to any of the preceding claims,
**characterised in**
**that** the sheath surfaces (6) or flanks (6) in the continuous opening (5) touch or are spaced apart in some areas.

7. Pipe protection hollow profile according to any of the preceding claims,
**characterised in**
**that** the pipe protection hollow profile (1) has a round, oval, or angular cross-section or a combined cross-section thereof.

8. Pipe protection hollow profile according to any of the preceding claims,
**characterised in**
**that** the sheath (3) has a circular ring-shaped cross-section or a discontinuous cross-section and/or

9. Pipe protection hollow profile according to any of the preceding claims,
**characterised in**
**that** the sheath (3) includes an inner surface and outer surface, where the inner surface and/or outer surface of the sheath (3) have a surface structure or profiling.

10. Pipe protection hollow profile according to any of the preceding claims, **characterised in**
**that** the continuous opening (5) is closable.

11. Pipe protection hollow profile according to any of the preceding claims,
**characterised in**
**that** the continuous opening (5) can be closed at least partially with a closure strip (8) or closure profile (8) complementary to the continuous opening (5).

12. Pipe protection hollow profile according to claim 10,
**characterised in**
**that** the closure strip (8) or the closure profile (8) is connected to the sheath (3) and can be inserted or swivelled into the continuous opening (5).

13. Pipe protection hollow profile according to any of the preceding claims 10 and 11, **characterised in**
**that** the continuous opening (5) is bondable and/or the closure strip (8) or the closure profile (8) can be glued, inserted, or snapped into the continuous opening (5).

## Revendications

1. Gaine de protection de tuyau (1) de forme longitudinale comprenant un espace intérieur (2) et une enveloppe (3) entourant l'espace intérieur (2) ainsi qu'une partie extérieure (4) en dehors de l'enveloppe (3), l'enveloppe (3) présentant une fente dans le sens de la longueur formant une ouverture continue (5) entre l'espace intérieur (2) et la partie extérieure (4), l'ouverture continue (5) dans le sens de la longueur se rétrécissant au moins par endroits de l'extérieur (4) vers l'intérieur (2),
**caractérisée en ce que**
la section transversale ou la hauteur de l'enveloppe (5) est agrandie ou élargie dans la zone de l'ouverture continue (5), l'épaisseur de l'enveloppe (5) de la gaine de protection de tuyau (1) augmentant fortement ou progressivement en direction de la périphérie dans la zone de l'ouverture (5).

2. Gaine de protection de tuyau selon la revendication 1,
**caractérisée en ce que**
l'ouverture continue (5) dans le sens de la longueur s'évase au moins par endroits de l'extérieur (4) vers l'intérieur (2).

3. Gaine de protection de tuyau selon l'une des revendications précédentes 1 et 2,
**caractérisée en ce que**
l'ouverture continue (5) présente au moins par endroits une section transversale en forme de v ou de u.

4. Gaine de protection de tuyau selon l'une des revendications précédentes,
**caractérisée en ce que**
les surfaces (6) ou les flancs (6) de l'enveloppe sont convexes et/ou concaves dans l'ouverture continue (5).

5. Gaine de protection de tuyau selon l'une des revendications précédentes,
**caractérisée en ce que**
l'extrémité rétrécie et/ou évasée de l'ouverture continue (5) se prolonge de manière approximativement parallèle ou présente une partie en forme de fente ou d'interstice (7).

6. Gaine de protection de tuyau selon l'une des revendications précédentes,
**caractérisée en ce que**
les surfaces (6) ou les flancs (6) de l'enveloppe se touchent ou sont espacés par endroits dans l'ouverture continue (5).

7. Gaine de protection de tuyau selon l'une des revendications précédentes,
**caractérisée en ce que**
la gaine de protection de tuyau (1) présente une section transversale ronde, ovale ou polygonale ou une section transversale combinant ces formes.

8. Gaine de protection de tuyau selon l'une des revendications précédentes,
**caractérisée en ce que**
l'enveloppe (3) présente une section transversale circulaire ou discontinue et/ou

9. Gaine de protection de tuyau selon l'une des revendications précédentes,
**caractérisée en ce que**
l'enveloppe (3) comprend une surface intérieure et une surface extérieure, la surface intérieure et/ou la surface extérieure de l'enveloppe (3) présentant une structure superficielle ou un profilage.

10. Gaine de protection de tuyau selon l'une des revendications précédentes, **caractérisée en ce que**
l'ouverture continue (5) peut être fermée.

11. Gaine de protection de tuyau selon l'une des revendications précédentes,
**caractérisée en ce que**
l'ouverture continue (5) peut être fermée au moins par endroits au moyen d'une bande de fermeture (8) ou d'un profilé de fermeture (8) complémentaire à l'ouverture continue (5).

12. Gaine de protection de tuyau selon la revendication 10,
**caractérisée en ce que**
la bande de fermeture (8) ou le profilé de fermeture (8) est relié à l'enveloppe (3) et peut être inséré ou basculé dans l'ouverture continue (5).

13. Gaine de protection de tuyau selon l'une des revendications précédentes 10 et 11, **caractérisée en ce que**
l'ouverture continue (5) peut être collée et/ou la bande de fermeture (8) ou le profilé de fermeture (8) peut être collé ou enfiché ou encliqueté dans l'ouverture continue (5).
